# EUROPÄISCHE PATENTSCHRIFT

(11) **EP 1 519 100 B1**
(45) Veröffentlichungstag und Bekanntmachung des Hinweises auf die Patenterteilung: **05.11.2008**
(21) Anmeldenummer: 04022301.8
(22) Anmeldetag: 20.09.2004
(51) Int. Cl.: F16L 55/179

(54) **Vorrichtung und Verfahren zur Rohrsanierung**
Apparatus and method of renovating pipes
Appareil et méthode pour la renovation de canalisations

(30) Priorität: 25.09.2003 DE 20314914 U; 04.12.2003 DE 10357059
(43) Veröffentlichungstag der Anmeldung: 30.03.2005
(60) Teilanmeldung: 08163334.9
(73) Patentinhaber: Trelleborg epros GmbH, 47228 Duisburg (DE)
(72) Erfinder: Mühlin, Michael, 41812 Erkelenz (DE)
(74) Vertreter: Patentanwälte Freischem

(56) Entgegenhaltungen:
- EP-A- 0 683 348
- EP-A- 0 823 579
- DE-A- 4 400 742
- GB-A- 2 150 050
- GB-A- 2 192 441
- GB-A- 2 320 076
- US-A- 5 207 031
- US-A- 5 659 915
- US-A- 5 927 341
- US-A- 5 950 682
- US-B1- 6 484 757

## Beschreibung

Die Erfindung betrifft eine Vorrichtung und ein Verfahren zur Rohrsanierung gemäß den Oberbegriffen der Patentansprüche 1 und 19. Sie betrifft insbesondere eine Vorrichtung und ein Verfahren zur Sanierung der Einmündung des Hausanschlusses von einem Hauptkanal in das Rohr eines Hausanschlusses.

Beispielsweise ist aus der Druckschrift DE 298 02 675 U1 eine Vorrichtung zur Sanierung von Rohranschlüssen bekannt, bei der das Positionierungsmittel von einem Schild gebildet wird, dessen Außenkontur an die Innenkontur des Hauptabwasserrohrs im Bereich der Einmündungsöffnung angepaßt ist und der über einen Auslegearm gegen den Bereich des Hauptabwasserrohrs, der die Einmündungsöffnung umgibt, gedrückt werden kann. Der Auslegearm ist Teil einer Transporteinheit, die im Hauptabwasserrohr verfahrbar ist. Der Schild wird in dem Hauptwasserrohr mittels der Transporteinheit verfahren und bei Erreichen des Einmündungsbereiches mittels des Auslegearms gegen das Hauptabwasserrohr gedrückt. In dem Schild ist eine Austrittsöffnung vorgesehen, durch welche ein Auskleideschlauch hindurchtreten kann. Zum Einbringen des Auskleideschlauchs in den sich an die Einmündungsöffnung anschließenden Rohrstutzen des Hausanschlussrohrs wird der zunächst unterhalb des Schildes befindliche Auskleideschlauch mit Druckluft beaufschlagt. Innerhalb des Auskleideschlauchs ist ein dichter Kalibrierschlauch angeordnet, der den Auskleideschlauch gegen die Rohrwand des Hausanschlussrohrs drückt. Der Auskleideschlauch besteht aus textilem Material, welches mit einem aushärtbaren Harz versehen ist. Nach dem Aushärten des Harzes wird der Kalibrierschlauch, der Schild und die Transporteinheit entfernt, so dass eine T-Rohrwandung das Hausanschlussrohr im Bereich seiner Mündung sowie den die Mündung umgebenden Abschnitt der Rohrwand des Hauptabwasserrohrs auskleidet und abdeckt.

Eine ähnliche Vorrichtung ist aus der Druckschrift DE 42 07 038 (entspricht US 5,609,439) bekannt. Hier wird das Positionierungsmittel als Packer bezeichnet. Der Packer weist einen Gummimantel auf, der um ein Tragrohr herum angeordnet ist und auf den Durchmesser des Hauptrohrs aufblasbar ist.

In dem Tragrohr und dem Gummimantel ist eine Öffnung vorgesehen, welche gegenüber der Mündung des Hausanschlussrohrs anzuordnen ist. Auf dem Gummimantel wird eine aushärtbare Rohrauskleidung derart angebracht, dass ein zylinderförmiges Schlauchteil innerhalb des Tragrohrs unterhalb der Öffnung angeordnet ist. Durch Zufuhr von Druckluft in den Packer wird zum einen dessen Gummimantel aufgebläht, bis er dicht gegen das Hauptrohr anliegt. Zum anderen tritt im Bereich der Öffnung ein an dem Gummimantel angeformter Gummizylinder durch die Öffnung aus dem Tragrohr nach außen in das Hausanschlussrohr hinein und stülpt dabei das Schlauchteil der Auskleidung nach außen, so dass es fest gegen die Innenwand des Hausanschlussrohrs gedrückt wird. Nach dem Aushärten der Auskleidung wird die Luft aus dem Packer abgesaugt, wobei der Zylinder an dem Gummimantel wieder durch die Öffnung in das Tragrohr hineingesogen wird. Anschließend kann der Packer entfernt werden.

Das Transportieren derartiger Vorrichtungen durch das Hauptrohr zum Mündungsbereich des Hausanschlussrohrs hat sich bei bekannten Vorrichtungen als problematisch erwiesen. Insbesondere ist die Ausrichtung des schlauchförmigen Teils der Auskleidung zu der Mündung des Hausanschlussrohrs schwierig. Bei Verschiebung dieses schlauchförmigen Auskleidungsabschnittes um einige Zentimeter in axialer Richtung des Hauptrohrs oder bei Verdrehung des Packers um einige Grad wird der schlauchförmige Zylinderabschnitt der Rohrauskleidung nicht zuverlässig in das Hausanschlussrohr hinein umgestülpt. Es können Verformungen auftreten, die beim Aushärten dieses schlauchförmigen Zylinderabschnitts fixiert werden und zu einer undichten Rohrauskleidung führen.

Weitere Vorrichtungen und ein Verfahren zur Rohrsanierung sind in den Druckschriften US 5 950 682, US 5 927 341, EP 0 823 579, GB 2 192 441, DE 44 00 742, GB 2 150 050, GB 2 320 076, US 5 207 031, EP 0 683 348, US 5 659 915 und US 6 484 757 bekannt. Insbesondere die letztgenannte Druckschrift US 6 484 757 offenbart eine Vorrichtung, bei der ein Ausrichtkörper beweglich an dem Transportmittel angeordnet ist und in die Mündung des Hausanschlussrohrs bewegbar ist, wobei ein Antrieb zum Bewegen des Ausrichtkörpers in die Mündung des Hausanschlussrohrs vorgesehen ist. Der Ausrichtkörper hat eine aufblasbare Manschette, die die Rohrauskleidung gegen die Wand des Hausanschlußrohrs direkt oberhalb der Mündung drückt. Auch bei der Vorrichtung gemäß dieser Druckschrift ist das Ausrichten schwierig, da der Ausrichtkörper exakt fluchtend zur Mündung des Hausanschlußrohrs positioniert werden muß, bevor er in dieses hineinbewegt werden kann.

Aufgabe der Erfindung ist es, eine Vorrichtung und ein Verfahren zur Sanierung von Rohranschlüssen zu schaffen, welche das zuverlässige Transportieren und Positionieren der Rohrauskleidung in Bezug auf den auszukleidenden, Mündungsbereich des Hausanschlussrohrs vereinfachen.

Diese Aufgabe wird erfindungsgemäß in Bezug auf die Vorrichtung mit einem Ausrichtkörper, der beweglich an dem Transportmittel angeordnet ist und der in die Mündung des Hausanschlussrohrs bewegbar ist, wobei ein Antrieb zum Bewegen des Ausrichtkörpers in die Mündung des Hausanschlussrohrs hinein vorgesehen ist, dadurch gelöst, daß sie Federmittel aufweist, die den Ausrichtkörper elastisch federnd in Richtung der Mündung des Hausanschlussrohrs drücken und ein Verschieben des Ausrichtkörpers ermöglichen, bis dieser in der Mündung des Hausanschlussrohrs verrastet.

Diese Federmittel sind besonders hilfreich, wenn der Ausrichtkörper nicht exakt zur Mündung des Hausanschlussrohrs ausgerichtet ist. In diesem Fall liegt der Ausrichtkörper federnd gegen die Wand des Hauptrohrs an. Wenn die Verschiebung nur einige Millimeter beträgt und ein schräger Abschnitt des Ausrichtungskörpers gegen die Kante im Mündungsbereich des Hausanschlussrohrs anliegt, rutscht der Ausrichtkörper aufgrund der federnden Andrückkraft in die Mündung des Hausanschlussrohrs hinein. Wenn ein größerer Versatz zwischen dem Ausrichtkörper und der Mündung besteht, ist es möglich, die gesamte Vorrichtung manuell oder durch Antriebsmittel axial zu verschieben oder zu verdrehen, bis eine exakte Ausrichtung vorliegt. Dabei ist es nicht erforderlich, den Mündungsbereich des Hausanschlussrohrs einsehen zu können. Durch das federnde Andrücken des Ausrichtkörpers in Richtung der Mündung wird dieser bei exakter Ausrichtung in die Mündung des Hausanschlussrohrs hinein gedrückt, so dass anschließend kein weiteres axiales Verschieben oder Drehen der Vorrichtung möglich ist. Dieses Verrasten signalisiert dem Bediener, dass die korrekte Ausrichtung erreicht ist.

Der Ausrichtkörper der erfindungsgemäßen Vorrichtung kann vor dem endgültigen Positionieren der Rohrauskleidung in die Mündung des Hausanschlussrohrs hinein bewegt werden. Er sollte dabei zumindest punkt- oder linienförmigen Kontakt mit der Wand des Hausanschlussrohrs im Bereich seiner Mündung haben, so dass die Rohrauskleidung genau zur Achse des Hausanschlussrohrs ausgerichtet ist. Zu diesem Zweck weist der Ausrichtkörper bei einer praktischen Ausführungsform eine Kontur auf, die komplementär zur Innenkontur des Hausanschlussrohrs in seinem Mündungsbereich ausgebildet ist. Der Ausrichtkörper kann aber auch kegelförmig ausgebildet sein, so dass er sich beim Einschieben in das Hausanschlussrohr selbst zentriert. Er kann weiterhin federnde oder teleskopierbare Kontaktfinger aufweisen, welche eine zentrierte Anordnung des Ausrichtkörpers innerhalb des Hausanschlussrohrs gewährleisten.

In einer praktischen Ausführungsform wird der Ausrichtkörper von einem Ring gebildet. Ähnlich den aus dem Stand der Technik bekannten Auskleidungsverfahren kann die Rohrauskleidung ein flexibles Trägermaterial, insbesondere Textilmaterial aufweisen, das mit einem aushärtbaren Harz versehen ist. Die Rohrauskleidung kann weiterhin einen schlauchartigen Zylinderabschnitt aufweisen, der in die Mündung des Hausanschlussrohrs einschiebbar ist. In der Praxis kann dieser schlauchartige Zylinderabschnitt den ringförmigen Ausrichtkörper außen umgeben, wenn der Ausrichtkörper in die Mündung des Hausanschlussrohrs eingeschoben wird.

Wie bei den aus dem Stand der Technik bekannten Verfahren besteht das Positionierungsmittel vorzugsweise aus einer aufblasbaren Hülle, die einen Stutzenschlauch aufweist, der im aufgeblasenem Zustand den Zylinderabschnitt der Rohrauskleidung gegen die Wand des Hausanschlussrohrs drückt. Bei der gerade beschriebenen praktischen Ausführungsform, bei der der Zylinderabschnitt der Rohrauskleidung den ringförmigen Ausrichtkörper beim Einschieben in die Mündung des Hausanschlussrohrs umgibt, ist es vorteilhaft, den Stutzenschlauch der aufblasbaren Hülle zwischen dem Zylinderabschnitt der Rohrauskleidung und dem Ring anzuordnen. Mit anderen Worten wird der schlauchartige Zylinderabschnitt der Rohrauskleidung gemeinsam mit dem Stutzenschlauch der aufblasbaren Hülle durch den ringförmigen Ausrichtkörper in das Innere der Hülle hineingezogen, bevor der ringförmige Ausrichtkörper in den Mündungsbereich des Hausanschlussrohrs bewegt wird. Dabei liegt der Bereich der Einbindung oder Verbindung des Stützenschlauches mit dem angrenzenden Bereich der aufblasbaren Hülle, welche im Wesentlichen im aufgeblasenen Zustand die Kontur des Hauptrohrs einnimmt, gegen den Ring an. Das Gleiche gilt für den Bereich der Einbindung des schlauchartigen Zylinderabschnittes in den angrenzenden Bereich der Rohrauskleidung, welche der Auskleidung des Hauptrohrs dient. Durch den Ausrichtkörper wird also der kritische Bereich des Übergangs der T-förmigen Rohranschlusses, das heißt des Übergangs zwischen dem Hausanschlussrohr und dem Hauptrohr im Bereich der Mündung des Hausanschlussrohrs, durch Eindrücken des Rings in direkten Kontakt mit dem für diesen Übergangsbereich vorgesehenen Abschnitt der Auskleidung gebracht. Beim anschließenden Positionieren der Auskleidung zur Aushärtung in dem Mündungsbereich ist somit sichergestellt, dass sowohl der kritische Übergangsbereich als auch die daran angrenzenden Bereiche der Auskleidung an ihrer vorgesehenen Position in dem Übergangsbereich zwischen Hausanschlussrohr und Hauptrohr anliegen.

Bei einer alternativen Ausführungsform kann der Ausrichtkörper vom Stutzenschlauch der Hülle selbst gebildet werden. Der Stutzenschlauch der Hülle sollte dabei von dem schlauchartigen Zylinderabschnitt der Auskleidung umgeben sein. Mit anderen Worten wird die Hülle teilweise aufgeblasen, so dass der Stutzenschlauch und der diesen umgebenden Zylinderabschnitt teilweise ausgestülpt werden. Bei diesem teilweise ausgestülpten Stutzenschlauch mit Zylinderabschnitt kann dann die Positioniervorrichtung noch verschoben werden, bis der Stutzenschlauch mit Zylinderabschnitt vollständig in die Rohrmündung eingreift. Hierbei ist allerdings eine erhöhte Reibung auf Grund der teilweise aufgeblasenen Hülle zu berücksichtigen. Bei einem Ausrichtkörper, der durch einen separaten Festkörper gebildet wird, besteht nur eine geringe Reibung.

Das Federmittel kann durch eine federnde Aufhängung des Ausrichtkörpers gebildet werden. Es kann ferner von einem federnden Fahrwerk der gesamten Vorrichtung gebildet werden. Schließlich kann der Ausrichtkörper selbst elastisch-federnd ausgebildet sein, beispielsweise, wenn der mit einem geringen Überdruck angeblasene Stutzenschlauch der aufblasbaren Hülle als Ausrichtkörper wirkt.

Ähnlich dem Stand der Technik kann die erfindungsgemäße Vorrichtung als Packer ausgebildet sein. Die aufblasbare Hülle bildet einen dehnfähigen Packerschlauch, der inversierbar ist, das heißt, er ist von außen nach innen stülpbar und umgekehrt ausgebildet. Der Packerschlauch weist etwa die Größe und Form des zu sanierenden Rohrabschnittes auf. Er besteht vorzugsweise aus einem Hauptabschnitt, der um den Packer herum angeordnet ist und im Wesentlichen den Durchmesser des Hauptrohrs aufweist. Er besteht ferner aus einem mit dem Hauptabschnitt verbundenen Zylinderabschnitt, der im Wesentlichen den Durchmesser des Hausanschlussrohrs aufweist. Der Zylinderabschnitt kann in der Praxis den Winkel zum Hauptabschnitt des Packerschlauches aufweisen, den das Hausanschlussrohr zum Hauptrohr aufweist. Mit Hilfe einer Hebevorrichtung und dem daran angeordneten Ausrichtmittel kann die Einbindung des Packerschlauches zum Stutzenschlauch, das heißt der Übergangsbereich zwischen Packerschlauch und Stutzenschlauch, in die Einmündung des Hausanschlussrohrs hineingeschoben werden. Die Rohrauskleidung besteht in dieser praktischen Ausführungsform aus einem mit aushärtbarem Harz versehenen Trägermaterial und wird auch als LCR-Liner bezeichnet. Durch das Einschieben des Übergangs zwischen Stutzenschlauch und Packerschlauch in die Einmündung des Hausanschlussrohrs wird die den Packerschlauch umgebende Rohrauskleidung positioniert. Durch das Aufblasen des Packerschlauches mit dem Stutzenschlauch wird die Rohrauskleidung, welche den Packerschlauch und den Stutzenschlauch umgibt, an den zu sanierenden Rohrabschnitt gedrückt.

Die aufblasbare Hülle, das heißt der Packerschlauch der erfindungsgemäßen Vorrichtung, kann mindestens eines der folgenden Merkmale aufweisen:
- er besteht aus einem mit Silikon beschichtetem Textilgewebe,
- er weist ein Untermaß gegenüber dem zu sanierenden Rohrabschnitt auf,
- der Stutzenschlauch des Packerschlauchs ist entsprechend dem Hausanschlusswinkels, vorzugsweise in einem Winkel von 45° bis 90°, an den das Hauptrohr ausfüllenden Abschnitt des Packerschlauchs angeformt.

Der Stutzenschlauch kann ein separates Teil sein, das fest mit dem Packerschlauch verbunden ist. Er kann alternativ von einem einstückig an den Packerschlauch angeformten Abschnitt gebildet werden.

Das Gerät, nachfolgend auch Packer genannt, saniert im Hauptkanal den Einmündungsbereich des Hausanschlusses, indem als Rohrauskleidung ein Kurzliner im Einmündungsbereich gesetzt wird und gleichzeitig eine definierte Länge in den Hausanschluss ragt, so dass diese Länge saniert wird. Dazu wird ein vorgeformter dehnfähiger Schlauch (aufblasbare Hülle) als Formgeber eingesetzt. Dieser Schlauch, der eine Form eines Zylinders (Packerschlauch) für das Hauptrohr besitzt, hat noch zusätzlich einen im allgemeinen zentrisch angeordneten zylinderförmigen Abschnitt (Stutzenschlauch), der im Winkel von 45° oder 90° an der Seitenfläche des Packerschlauchs angeordnet ist.

Der seitliche Stutzenschlauch wird vor der Sanierung in den Packerschlauch zusammen mit dem Liner (Auskleidung), der im Wesentlichen die gleiche Form wie der Formgeber hat, in den Packerschlauch re-inversiert, d.h. in den Packerschlauch hinein umgestülpt. Die Luft im Packerschlauch und Stutzenschlauch wird abgesaugt. Dadurch entsteht ein Unterdruck, und sowohl der Packerschlauch als auch der Liner, der den Packerschlauch umgibt, liegen eng an der Vorrichtung an. Damit wird der Liner auf dem Gerät gegen Verrutschen gesichert.

Der Liner besitzt eine Beschichtung an der Innenseite und ist somit wasserdicht.

Das Gerät wird mit arretierten Luftschiebestangen zur Schadstelle geschoben. Die Luftschiebestangen dienen zum einen der Zufuhr von Druckluft sowie dem Absaugen der Luft und zum anderen dem Verschieben des Gerätes. An dem Gerät sind zwei teleskopartige Radsysteme (Fahrwerke) montiert. Über die Radsysteme wird das Gerät verschiebbar und verdrehbar in dem Hauptrohr geführt. Über die Luftschiebestange wird das Gerät an der Schadstelle axial verschoben oder gedreht und hierdurch optimal zum Hausanschlussrohr ausgerichtet. Für die Positionierung kann eine Kamera am Gerät montiert sein, die es ermöglicht, die Ausrichtung des Geräts zur Mündung des Hausanschlussrohrs zu erkennen.

Der Packer weist eine Packerstange auf. Zur Positionierung ist auf der Packerstange ein Hebemechanismus mit einem Druckluftzylinder montiert, welcher den Ring in den Einmündungsbereich des Hausanschlussrohrs hineinschieben kann. Dieser Ring liegt unter dem Packerschlauch direkt an der Einbindung des Packerschlauches zum Stutzenschlauch. Mit Hilfe der Kamera wird die Einmündung der Hausanschlussleitung zum Hauptkanal gesucht. Um jedoch eine eindeutige Positionierung durchführen zu können, wird von außerhalb des Rohrs über ein Steuerpult der Hebemechanismus angesteuert und dieser fährt den Ring in die Einmündung hinein. Falls jedoch der Einmündungsbereich nicht gefunden worden ist, kann das Sanierungsgerät verschoben und verdreht werden, bis der Ring in den Einmündungsbereich hineinfährt.

Nach der Positionierung wird der Packerschlauch angeblasen, und zeitlich versetzt oder verzögert wird der Stutzenschlauch mit dem Liner in den Hausanschluss inversiert, das heißt eingestülpt. Das zeitlich verzögerte Umstülpen wird durch ein hochfestes Seil, welches in einer Wickelbox geführt und gebremst wird, erreicht. Nach der Aushärtung des Liners wird die Luft aus dem Gerät abgesaugt und der Ring wird zurückgefahren. Das Gerät kann nun von der sanierten Schadstelle entfernt werden.

Bei einer vorteilhaften Ausführungsform ist der Antriebsmotor für das Transportmittel zum Transportieren des Positionierungsmittels ein Pneumatikmotor.

Die meisten bisher bekannten Geräte setzen zum Verfahren innerhalb des Hauptrohrs Elektromotoren, üblicherweise Schrittmotoren, ein. Derartige Elektromotoren erfordern Zuführleitungen für elektrische Energie. Zudem können Elektromotoren die Ursache von Funkenbildung sein. In Abwasserrohren entstehen häufig methanhaltige und damit brennbare Gase. Eine Funkenbildung erhöht die Gefahr eines Brandes oder einer Explosion innerhalb der zu sanierenden Abwasserkanäle oder Abwasserrohre. Aus diesem Grund schlägt die Erfindung vor, als Antriebsmotor einen Pneumatikmotor zu benutzen. Pneumatikmotoren sind in unterschiedlichster Bauweise bekannt. Sie können beispielsweise als Kolbenmotor ähnlich einem Verbrennungsmotor axial bewegliche Kolben aufweisen, die über eine Kurbelwelle einen Antriebsdrehmoment erzeugen. Die Kolben laufen in Zylindern, denen über Ventile zu bestimmten Zeiten Druckluft zugeführt wird. Auch sind Pneumatikmotoren mit mehreren in einem Ringbereich angeordneten Kolben bekannt, wobei die Pleuel der Kolben auf eine Taumelscheibe wirken. Hier erfolgt die Luftzufuhr zu den Kolben über Steuerschlitze. Schließlich sind Pneumatikmotoren mit Drehkolben oder turbinenartigen Laufrädern bekannt. Die Vorrichtung verfügt bereits zum Aufblasen der aufblasbaren Hülle über eine Druckleitung. Diese Druckleitung kann gleichzeitig als Zufuhr für das Arbeitsmedium des Pneumatikmotors dienen.

Ferner kann eine praktische Ausführungsform der Erfindung eine Heizvorrichtung zum Beheizen der aushärtbaren Rohrauskleidung aufweisen. Durch das Beheizen kann die Zeit zum Aushärten oder Abbinden des aushärtbaren Harzes reduziert werden. Die Heizvorrichtung kann beispielsweise von einer elektrischen Heizwendel gebildet werden.

In Bezug auf das Verfahren wird die erfindungsgemäße Aufgabe durch die Gesamtheit der Merkmale des Patentanspruchs 19 gelöst. ein Ausrichtkörpers wird in die Mündung des Hausanschlussrohrs vor dem endgültigen Positionieren der Rohrauskleidung eingeschoben, so daß sichergestellt ist, dass sich die erfindungsgemäße Vorrichtung in ihrer vorbestimmten Position innerhalb des Hauptrohrs befindet. Der Ausrichtkörper wird erfindungsgemäß während des Einschiebens elastisch in Richtung der Mündung des Hausanschlussrohrs gedrückt. Falls der Ausrichtkörper nicht exakt zur Mündung des Hausanschlussrohrs ausgerichtet ist, wird er unter elastischer Vorspannung gegen einen Wandabschnitt des Hauptrohrs anliegen. Durch geringfügiges Verschieben oder Verdrehen, lässt sich der Ausrichtkörper zur Mündung des Hausanschlussrohrs ausrichten, wobei die elastische Vorspannkraft den Ausrichtkörper in das Hausanschlussrohr hineindrückt.

Wie erwähnt, kann bei einer praktischen Ausführungsform als Ausrichtkörper ein Ring verwendet werden. Als Positionierungsmittel kann eine aufblasbare Hülle verwendet werden, die eine Rohrauskleidung aus einem mit aushärtbarem Harz versehenen flexiblen Trägermaterial gegen einen zu sanierenden Rohrabschnitt drückt. Ein Zylinderabschnitt der Rohrauskleidung wird dabei von einem Stutzenschlauch der aufblasbaren Hülle in die Mündung des Hausanschlussrohrs gedrückt. Während des Transports der Rohrauskleidung durch das Hauptrohr und vor dem Einschieben des ringförmigen Ausrichtkörpers kann der Stutzenschlauch der Hülle zusammen mit dem Zylinderabschnitt der Rohrauskleidung durch den ringförmigen Ausrichtkörper hindurch in das Innere der Hülle gestülpt werden. Während des Transports der Hülle durch das Hauptrohr zur Rohrabzweigung hin, kann die Luft aus der Hülle abgesaugt sein. Hierdurch liegt die Hülle eng an der Vorrichtung an und wird gegen Verrutschen gesichert.

Der kritische Bereich der Rohrauskleidung ist der Bereich der Verbindung zwischen dem Zylinderabschnitt der Auskleidung und dem der Auskleidung des Hauptrohrs dienenden Abschnitt der Rohrauskleidung. Dieser Einbindungsbereich befindet sich am unteren Ende des Zylinderabschnitts. Bei einer praktischen Ausführungsform des Verfahrens wird der Einbindungsbereich mittels des Ausrichtkörpers gegen die Mündung des Hausanschlussrohrs gedrückt. Der Ausrichtkörper liegt von innen gegen den Einbindungsbereich an.

Nach dem Aushärten der Rohrauskleidung wird der Ausrichtkörper bei einer praktischen Ausführungsform des Verfahrens von der genannten Mündung wegbewegt, und die Luft wird aus der aufblasbaren Hülle abgelassen oder abgesaugt.

Das Positioniermittel für die Rohrauskleidung, das insbesondere von dem Packer gebildet wird, kann über verbundene Gestänge während des Positionierens in dem Hauptrohr verschoben und gedreht werden. Das Positioniermittel kann beim Verschieben und Drehen über ein Fahrwerk mit teleskopartigen Radsystemen geführt werden.

Gemäß einer praktischen Ausführungsform des Verfahrens kann am Ende des Stutzenschlauchs der Hülle ein im Inneren des Stutzenschlauchs verlaufendes Seil befestigt sein. Das Seil dient dem Zurückziehen des Stutzenschlauchs. Mit Hilfe des Seils kann bei in dem Stutzenschlauch vorhandenem leichtem Überdruck der Stutzenschlauch zusammen mit dem Zylinderabschnitt der Rohrauskleidung durch den ringförmigen Ausrichtkörper hindurch in die aufblasbare Hülle hineingezogen werden. Durch den Überdruck in dem Stutzenschlauch wird der nach innen gestülpte Abschnitt des Stutzenschlauchs fest zusammengedrückt. Das Ende des Zylinderabschnitts der Auskleidung kann in den Umstülpungsbereich, das heißt dem innerhalb des Stutzenschlauches fest zusammengedrückten Endabschnitt des Stutzenschlauchs, gestopft werden. Der Druck innerhalb des Stutzenschlauchs klemmt dabei das Ende des Zylinderabschnitts ein. Beim weiteren Zurückziehen des Stutzenschlauchs wird das Ende des Zylinderabschnitts mitgenommen und der Zylinderabschnitt aus seiner nach außen hervorragenden Stellung nach innen in die aufblasbare Hülle hinein umgestülpt.

Ausführungsformen der Erfindung werden nachfolgend unter Bezugnahme auf die beigefügten Zeichnungen erläutert. Diese zeigen in:
- Figur 1: eine schaubildliche Darstellung einer erfindungsgemäßen Vorrichtung mit evakuiertem Packerschlauch,
- Figur 2: eine der Figur 1 entsprechende Darstellung mit teilweise luftbefülltem Packerschlauch und angehobenem Ausrichtkörper,
- Figur 3: eine den Figuren 1 und 2 entsprechende Darstellungen mit vollständig aufgeblasenem Packerschlauch,
- Figur 4: eine Seitenansicht eines Antriebs für den Ausrichtkörper,
- Figur 5: eine Vorderansicht des Antriebs aus Figur 4,
- Figur 6: eine Unteransicht des Antriebs aus Figur 4,
- Figur 7: eine Seitenansicht einer Ausführungsform der Stange des Packers ohne Packerschlauch, Rohrauskleidung und Fahrwerk,
- Figur 8: eine Draufsicht des ringförmigen Ausrichtkörpers des Packers aus Figur 7 und
- Figur 9: eine der Figur 1 entsprechende Abbildung des Packers mit einem motorisch angetriebenen Transportmittel.

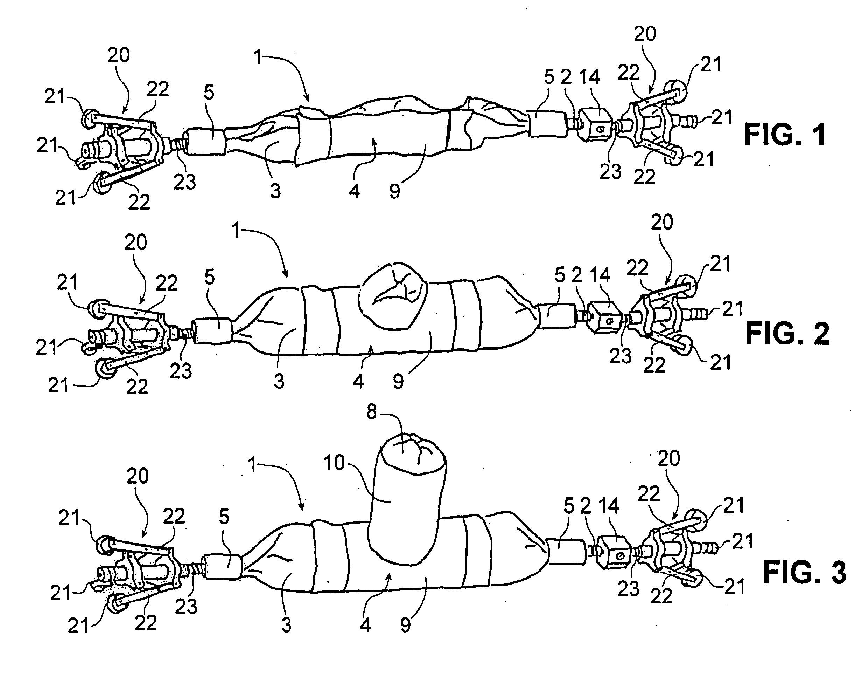

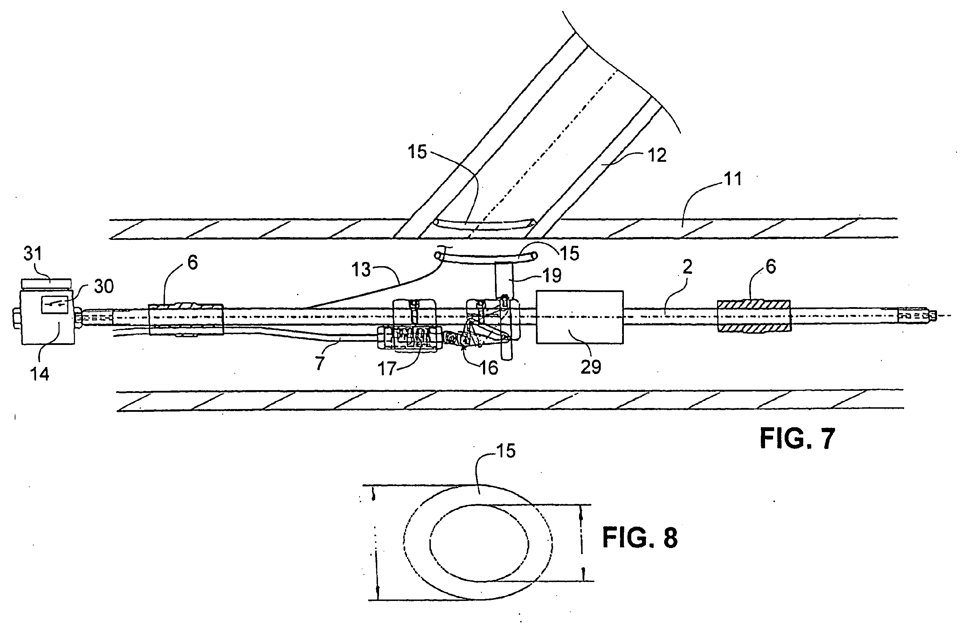

Der in den Figuren 1 bis 3 gezeigte Packer 1 besteht im Wesentlichen aus einer starren Packerstange 2, auf der der Packerschlauch 3 und eine flexible Rohrauskleidung 4 aufgeschoben ist. Jedes der beiden Enden des Packerschlauchs 3 ist mit einer Spannmanschette 5 um einen zylinderförmigen Anschlusskopf 6 (vgl. Fig. 7) gespannt, so dass eine luftdichte Verbindung entsteht. Die Anschlussköpfe 6 sind ihrerseits fest und luftdicht mit der Packerstange 2 verbunden. Der in Figur 7 links dargestellte Anschlusskopf 6 nimmt zusätzlich eine Druckleitung 7 auf.

An dem Packerschlauch 3 ist ferner ein Stutzenschlauch 8 angeformt, der einen Winkel zum Packerschlauch 3 aufweist, welcher dem Winkel zwischen einem Hausanschlussrohr und einem Hauptrohr, die im Mündungsbereich saniert werden sollen, entspricht. In den Figuren 1 bis 3 beträgt dieser Winkel 90°. Zur Sanierung des in Figur 7 dargestellten Rohranschlusses muss der Winkel 45° betragen.

Auf den Packerschlauch 3 ist die Rohrauskleidung 4 aufgeschoben, welche T-förmig ausgebildet ist. Sie besteht aus einem Hauptabschnitt 9 und einem Zylinderabschnitt 10, der in den Fig. 1-3 einen Winkel von 90° zum Hauptabschnitt 9 aufweist. Der Hauptabschnitt 9 der Auskleidung 4 erstreckt sich parallel zur Packerstange 2 und weist bei aufgeblasenem Packerschlauch 3 im Wesentlichen den gleichen Durchmesser auf, wie das zu sanierende Hauptrohr 11 (wie Figur 7). Der Zylinderabschnitt 10 weist einen dem Hausanschlussrohr 12 entsprechenden Durchmesser auf.

Der Packerschlauch 3 bildet zusammen mit seinem Stutzenschlauch 8 eine aufblasbare Hülle zum Positionieren der Auskleidung 4 in dem zu sanierenden Mündungsbereich des Hausanschlussrohrs 12 (Figur 7) in das Hauptrohr 11.

In der Figur 1 ist der Packer 1 in evakuiertem Zustand gezeigt. Hierzu wird über die Druckleitung 7 Luft aus der aufblasbaren Hülle, bestehend aus Packerschlauch 3 und Stutzenschlauch 8, abgesaugt. Das Ende des Stutzenschlauchs 8 ist verschlossen und über ein Seil 13 (siehe Figur 7) gehalten, welches durch die Packerstange 2 hindurch in eine Wickelbox 14 führt und dort aufgewickelt werden kann. Um den evakuierten Zustand der Figur 1 zu erreichen, wird zunächst der Packerschlauch 3 und die Auskleidung 4 auf der Packerstange 2 angeordnet und der Packerschlauch 3 aufgeblasen, bis die in Figur 3 dargestellte Anordnung erreicht wird. Die Auskleidung 4 besteht aus textilem Material und wird in aufgeblasenem Zustand mit einem aushärtbaren Harz getränkt. Anschließend wird das Seil 13 in die Wickelbox gewickelt. Wie in Figur 7 zu erkennen ist, verläuft das Seil 13 durch einen ringförmigen Ausrichtkörper 15 hindurch. Der Stutzenschlauch 8 wird folglich mit dem Seil 13 durch den Ring 15 hindurch in das Innere des Packerschlauchs 3 gezogen. Dabei verbleibt ein geringer Überdruck innerhalb des Packerschlauchs 3. Das obere Ende des Zylinderabschnitts 10 der Rohrauskleidung 4 wird in den Bereich der Umstülpung des zurückgezogenen Stutzenschlauchs 8 hineingestopft und beim weiteren Zurückziehen des Stutzenschlauchs mit dem Seil 13 im Bereich der Umstülpung festgeklemmt und in das Innere des Packerschlauchs 3 gezogen. Nach vollständigem Zurückziehen des Seils 13 wird die Luft aus dem Packerschlauch 3 ausgesaugt, um den in Figur 1 gezeigten evakuierten Zustand zu erreichen.

Die Wickelbox 14 kann ferner einen Mikroschalter 30 aufweisen (siehe Fig. 7), der betätigt wird, wenn das Seil 13 vollständig aus der Wickelbox 14 herausgezogen ist. Der Mikroschalter 30 löst ein Signalmittel 31 aus, das dem Bediener die vollständige Ausdehnung des Stutzenschlauchs 8 und somit die vollständige Einstülpung des Zylinderabschnitts 10 in das Hausanschlussrohr 12 anzeigt. Die Wickelbox 14 mit dem Mikroschalter 30 wirkt somit als Erfassungsmittel für die vollständige Ausdehnung des Stutzenschlauchs 8. Jedes geeignete Signalmittel kann verwendet werden, so wie ein Signallicht auf dem Steuerpult zum Bedienen des Packers oder eine Pfeife 31, die mit pneumatischem Druck betätigt wird, der z.B. aus dem pneumatischen Zylinder 17 des Hebemechanismus (siehe unten) entnommen wird. Ein durch die Pfeife 31 erzeugtes akustisches Signal wird gut durch das Kanalisationssystem, in dem der Packer eingesetzt wird, übertragen.

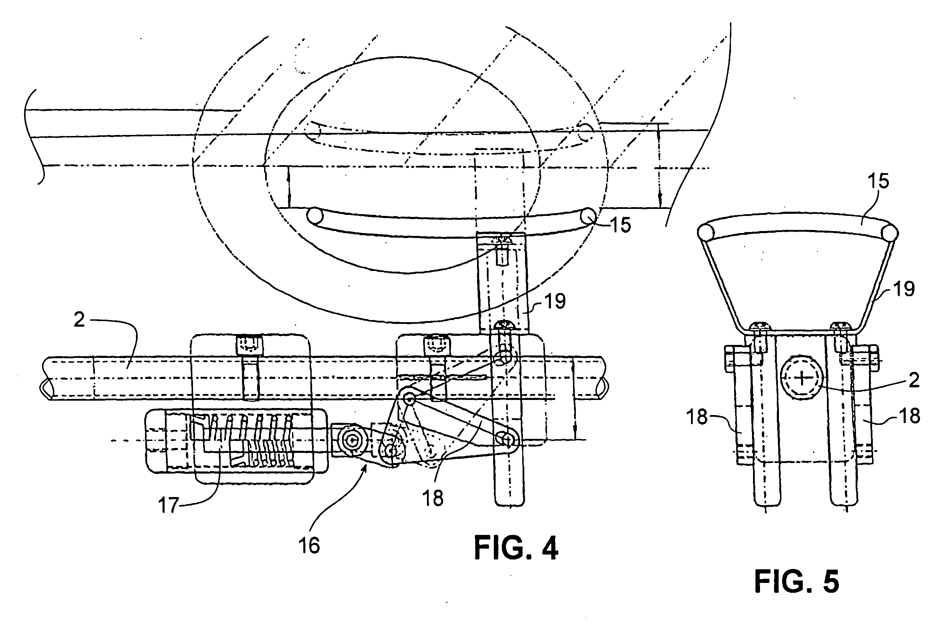

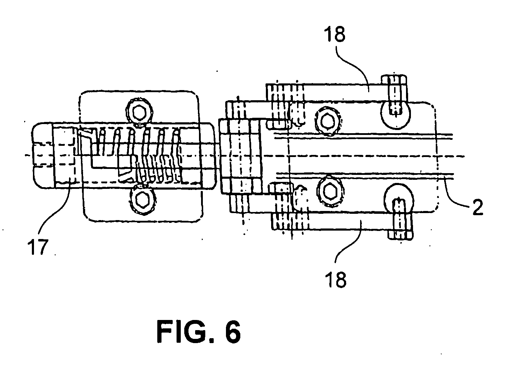

Wie insbesondere in den Figuren 4 bis 7 zu erkennen, ist der ringförmige Ausrichtkörper 15 über einen Hebemechanismus 16 an der Packerstange 2 befestigt. Der Hebemechanismus 16 weist einen Pneumatikzylinder 17 und zu beiden Seiten der Packerstange 2 einen Kniehebel 18 auf. An den freien Enden der Kniehebel 18 ist ein Traggestell 19 befestigt, welches den Ring 15 trägt. Wenn der Pneumatikzylinder 17 mit Druck beaufschlagt wird, wird der Ring 15 über den Hebemechanismus 16 nach oben bewegt und nimmt die in Figur 4 in strichpunktierten Linien eingezeichnete Position ein. Die obere Position des Rings 15 ist in Figur 7 in dünnen Linien eingezeichnet. In dieser oberen Position befindet sich der Ring 15 im Mündungsbereich des Hausanschlussrohrs 12. Wenn der Ring 15 zur Sanierung eines schräg in das Hauptrohr mündenden Hausanschlussrohrs 12 verwendet wird, ist die äußere Kontur des Ringes 15 entsprechend der Innenkontur der Mündung des Hausanschlussrohrs 12 oval auszubilden (siehe Figur 8).

An beiden Enden der Packerstange 2 sind Fahrwerke 20 angeordnet. Jedes Fahrwerk 20 besteht aus drei Führungsrädern 21, die über spreizbare Streben 22 mit der Packerstange 2 verbunden sind. Eine schraubenförmige Feder 23 drückt die Streben 22 jedes Fahrwerk über eine gemeinsame Führungshülse in die aufgespreizte Stellung. Auf diese Weise wird die Packerstange 2 durch die Fahrwerke 20 im Wesentlichen in der Mitte des Hauptrohrs 11 elastisch federnd und drehbar geführt.

Zum Anbringen einer Rohrauskleidung 4 wird der Packer in der in Figur 1 dargestellten Anordnung mit evakuiertem Packerschlauch 3 in das Hauptrohr eingebracht und zum Mündungsbereich eines Hausanschlussrohrs 12 in ein Hauptrohr 11 geschoben (siehe Figur 7). In dieser Position wird der Hebemechanismus 16 (Figuren 1 bis 3) aktiviert. Hierzu wird der Pneumatikzylinder 17 mit Druckluft beaufschlagt. Dadurch wird der Ring 15, der sich innerhalb des Packerschlauchs 3 im Bereich der Verbindung zwischen Packerschlauch 3 und Stutzschlauch 8 befindet, nach oben in die Mündung des Hausanschlussrohrs 12 gedrückt. Wenn die Mündung des Hausanschlussrohrs 12 nicht korrekt zum Ring 15 ausgerichtet ist, stützt sich dieser über die zwischenliegenden Bereiche des Packerschlauchs 3 und der Auskleidung 4 gegen die Wandung des Hauptrohrs 11 ab. Dabei wird das elastisch federnde Fahrwerk 20 zusammengedrückt. In diesem Zustand ist es möglich, den Packer 1 innerhalb des Hauptrohrs axial zu verschieben oder zu drehen, bis der Ring 15 in die Mündung des Hausanschlussrohrs 12 hineingleitet. Sobald das passiert ist, entsteht ein im Wesentlichen formschlüssiger Eingriff des als Ausrichtkörper wirkenden Rings 15 in der Mündung des Hausanschlussrohrs 12. Eine weitere Bewegung des Packers 1 ist danach nicht mehr möglich.

Wie erwähnt, ist die Außenseite des Rings 15 von dem Verbindungsbereich zwischen Packerschlauch 3 und Stutzenschlauch 8 (In Figur 7 nicht dargestellt) bzw. von dem Verbindungsbereich zwischen dem Hauptabschnitt 9 der Auskleidung 4 und deren Zylinderabschnitt 10 umgeben. Dieser Verbindungsbereich der Auskleidung 4 wird durch den ringförmigen Ausrichtkörper 15 in der für ihn vorgesehenen Endposition in dem Bereich der Rohrmündung gehalten. Nun kann über die Druckleitung 7 Druckluft in den Packerschlauch 3 eingeleitet werden, wobei der Stutzenschlauch 8 mit dem Zylinderabschnitt 10 nach außen gestülpt wird und die in Figur 3 erkennbare Form erzielt wird. Abweichend von der Darstellung in Figur 3 müssen bei einer Auskleidung eines Rohrs gemäß Figur 7 der Stutzenschlauch 8 und der Zylinderabschnitt 10 im Winkel von 45° zum Packerschlauch 3 bzw. Hauptabschnitt 9 der Aufteilung 4 verlaufen.

Die aufblasbare Hülle 3 bleibt so lange aufgeblasen, bis die Auskleidung 4 ausgehärtet ist. Anschließend kann die Luft aus der aufblasbaren Hülle, bestehend aus Packerschlauch 3 und Stutzenschlauch 8, abgesaugt werden. Schließlich kann der Packer 1 mit dem Packerschlauch 3 aus der ausgehärteten Rohrauskleidung 4 herausgezogen werden.

In der Figur 7 sind die Fahrwerke 20 des Packers 1 aus Gründen der Übersichtlichkeit nicht dargestellt.

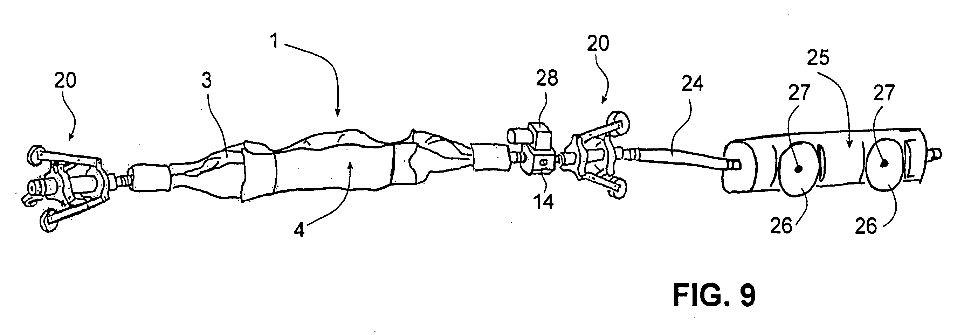

Die Figur 9 zeigt eine der Figur 1 entsprechende Darstellung des Packers 1. Der Packer 1 ist über einen biegbaren aber im Wesentlichen nicht komprimierbaren oder dehnbaren Schlauchabschnitt 24 mit einem Antriebsmotor 25 verbunden. An dem Gehäuse des Antriebsmotors 25 sind auf jeder Seite zwei Räder 26 angeordnet. Mindestens eine der Radachsen 27, welche ein Radpaar trägt, ist durch den Antriebsmotor 25 antreibbar. Der Antriebsmotor 25 ist ein Pneumatikmotor, vorzugsweise ein mit Druckluft betriebener Kolbenmotor. Auf diese Weise kann der Antriebsmotor 25 über die gleiche Druckzufuhr gespeist werden, welche die Druckluft in das Innere des Packerschlauchs 3 leitet.

Auf der Wickelbox 14 ist in der Ausführungsform aus Figur 9 zusätzlich eine elektronische Kamera 28 angeordnet. Die elektronische Kamera 28 weist vorzugsweise einen CCD-Chip zur Bildaufnahme auf. Sie ist entweder über eine Datenleitung oder eine Funkverbindung (Blue Tooth, Wireless LAN oder ähnliches) mit einer optischen Anzeigevorrichtung (Bildschirm) verbunden. Das auf dem Bildschirm wiedergegebene Bild der Kamera 28 erleichtert die Positionierung des Packers 1 im Mündungsbereich eines Hausanschlussrohrs 12.

Zusätzlich kann neben oder hinter der Kamera 28 eine Leuchte angeordnet werden, welche den von der Kamera 28 aufgenommenen Bereich ausleuchtet.

Schließlich zeigt die Figur 7 nahe dem Ring 15 eine Heizung 29. Die Heizung 29 wird vorzugsweise von einer elektrischen Heizwendel gebildet, die über einen Trenn-Transformator betrieben wird. Der Transformator kann zur Aufnahme verschiedener Eingangsspannungen ausgelegt sein. Eine derartige elektrische Heizwendel ist sehr einfach und wenig störanfällig.

### Bezugszeichenliste:

- 1: Packer
- 2: Packerstange
- 3: Packerschlauch, aufblasbare Hülle
- 4: Auskleidung
- 5: Spannmanschetten
- 6: Anschlusskopf
- 7: Druckleitung
- 8: Stutzenschlauch
- 9: Hauptabschnitt
- 10: Zylinderabschnitt
- 11: Hauptrohr
- 12: Hausanschlussrohr
- 13: Seil
- 14: Wickelbox
- 15: Ring, ringförmiger Ausrichtkörper
- 16: Hebemechanismus, Antrieb
- 17: Pneumatikzylinder
- 18: Kniehebel
- 19: Traggestell
- 20: Fahrwerk
- 21: Führungsrad
- 22: Strebe
- 23: Feder
- 24: Schlauchabschnitt
- 25: Antriebsmotor
- 26: Antriebsrad
- 27: Radachse
- 28: elektronische Kamera
- 29: Heizung
- 30: Mikroschalter
- 31: Signalpfeife

## Patentansprüche

1. Vorrichtung zur Sanierung von Rohranschlüssen, mit
• einem Positionierungsmittel (3,8) zum Positionieren einer aushärtbaren Rohrauskleidung (4) an der Abzweigung eines Hausanschlussrohrs von einem Hauptrohr (11),
• einem Transportmittel zum Transportieren des Positionierungsmittels (3,8) und der Rohrauskleidung (4) zu der genannten Abzweigung,
• einem Ausrichtkörper (15), der beweglich an dem Transportmittel angeordnet ist und der in die Mündung des Hausanschlussrohrs (12) bewegbar ist,
• einem Antrieb (16) zum Bewegen des Ausrichtkörpers (15) in die Mündung des Hausanschlussrohrs (12),
**dadurch gekennzeichnet, dass** sie Federmittel (23) aufweist, die den Ausrichtkörper (15) elastisch federnd in Richtung der Mündung des Hausanschlussrohrs (12) drücken und ein Verschieben des Ausrichtkörpers (15) ermöglichen, bis dieser in der Mündung des Hausanschlussrohrs (12) verrastet.

2. Vorrichtung nach Anspruch 1, **dadurch gekennzeichnet, dass** der Ausrichtkörper von einem Ring (15) gebildet wird.

3. Vorrichtung nach Anspruch 1 oder 2, **dadurch gekennzeichnet, dass** die Rohrauskleidung (4) ein mit aushärtbarem Harz versehenes flexibles Trägermaterial aufweist.

4. Vorrichtung nach Anspruch 3, **dadurch gekennzeichnet, dass** die Rohrauskleidung (4) einen Zylinderabschnitt (10) aufweist, der in die Mündung des Hausanschlussrohrs (12) einschiebbar ist.

5. Vorrichtung nach den Ansprüche 2 bis 4, **dadurch gekennzeichnet, dass** der Zylinderabschnitt (10) den Ring (15) beim Einschieben in die Mündung des Hausanschlussrohrs (12) umgibt.

6. Vorrichtung nach Anspruch 4, **dadurch gekennzeichnet, dass** das Positionierungsmittel eine aufblasbare Hülle (3) ist, die einen Stutzenschlauch (8) aufweist, der im aufgeblasenen Zustand den Zylinderabschnitt (10) gegen die Wand des Hausanschlussrohrs (12) drückt.

7. Vorrichtung nach Anspruch 6, **dadurch gekennzeichnet, dass** der Ausrichtkörper von dem Stutzenschlauch (8) der Hülle gebildet wird.

8. Vorrichtung nach einem der vorangehenden Ansprüche, **dadurch gekennzeichnet, dass** das Transportmittel mindestens ein Fahrwerk (20) aufweist, welches die genannten Federmittel (23) aufweist, über die Räder (21) federnd mit dem Transportmittel verbunden sind.

9. Vorrichtung nach Anspruch 6, **dadurch gekennzeichnet, dass** die aufblasbare Hülle ein inversierbarer und dehnfähiger Packerschlauch (3) ist, welcher etwa die Größe und Form des zu sanierenden Rohrabschnittes, einschließlich des eingebundenen Stutzenschlauches (8), besitzt, wobei mit Hilfe eines Hebemechanismus (16) und dem Ausrichtmittel (15) die Einbindung des Packerschlauches (3) zum Stutzenschlauch (8) in die Einmündung des Hausanschlussrohrs (12) hineinschiebbar ist und wobei die Rohrauskleidung (4) aus einem mit aushärtbarem Harz versehenen Trägermaterial (LCR-Liner) durch das Hineinschieben positioniert und durch Aufblasen des Packerschlauches (3) an den zu sanierenden Rohrabschnitt gedrückt wird.

10. Vorrichtung nach Anspruch 9, **dadurch gekennzeichnet, dass** der Packerschlauch (3) mindestens eines der folgenden Merkmale aufweist:
• er besteht aus einem mit Silikon beschichteten Textilgewebe,
• er weist ein Untermaß gegenüber dem zu sanierenden Rohrabschnitt auf,
• der Stutzenschlauch (8) des Packerschlauchs (3) ist entsprechend dem Hausanschlusswinkel, vorzugsweise in einem Winkel von 45° bis 90°, an den das Hauptrohr (11) ausfüllenden Abschnitt (9) des Packerschlauchs (3) angeformt.

11. Vorrichtung nach Anspruch 9 oder 10, **dadurch gekennzeichnet, dass** der Stutzenschlauch (8) ein an den Packerschlauch (3) angeformter Abschnitt oder ein hiermit fest verbundenes Teil ist.

12. Vorrichtung nach einem der vorangehenden Ansprüche, **dadurch gekennzeichnet, dass** der Antriebsmotor (25) ein Pneumatikmotor ist.

13. Vorrichtung nach Anspruch 12, **dadurch gekennzeichnet, dass** das Positionierungsmittel (3,8) eine aufblasbare Hülle ist und dass sie eine Druckleitung (7) für die Zufuhr von Druckluft zum Aufblasen der aufblasbaren Hülle (3,8) aufweist, wobei die Druckleitung dem Pneumatikmotor (25) Druckluft als Arbeitsmedium zuführt.

14. Vorrichtung nach einem der vorangehenden Ansprüche, **dadurch gekennzeichnet, dass** sie eine Heizvorrichtung (29) zum Beheizen der aushärtbaren Rohrauskleidung (4) aufweist.

15. Vorrichtung nach Anspruch 14, **dadurch gekennzeichnet, dass** die Heizvorrichtung (29) eine elektrische Heizwendel aufweist

16. Vorrichtung nach einem der vorangehenden Ansprüche, **dadurch gekennzeichnet, daß** das Positionierungsmittel (8) mit einem Erfassungsmittel (14,30) zur Erfassung der vollständigen Ausdehnung des Positionierungsmittels (8) verbunden ist.

17. Vorrichtung nach Anspruch 16, **dadurch gekennzeichnet, daß** das Positionierungsmittel ein Stutzenschlauch (8) ist und das Erfassungsmittel eine Wickelbox (14) ist, welche einen Schalter (30) aufweist und mit dem Stutzenschlauch (8) durch ein Seil (13) verbunden ist.

18. Vorrichtung nach Anspruch 17, **dadurch gekennzeichnet, daß** der Schalter (30) mit einem Signalmittel (31) wirkend verbunden ist.

19. Verfahren zur Sanierung von Rohranschlüssen, welches folgende Schritte umfasst:
• Transportieren einer aushärtbaren Rohrauskleidung (4) zu der Abzweigung eines Hausanschlussrohrs (12) von einem Hauptrohr (11),
• Positionieren der aushärtbaren Rohrauskleidung (4) an der genannten Abzweigung,
• Aushärten der Rohrauskleidung (4),
• Einschieben eines Ausrichtkörpers (15) in die Mündung des Hausanschlussrohrs (12) vor dem Positionieren der Rohrauskleidung (4),
**dadurch gekennzeichnet, dass** der Ausrichtkörper (15) elastisch in Richtung der Mündung des Hausanschlussrohrs (12) gedrückt wird und erforderlichenfalls verschoben wird, bis der Ausrichtkörper (15) in der Mündung des Hausanschlussrohrs (12) verrastet.

20. Verfahren nach Anspruch 19, **dadurch gekennzeichnet, dass** als Ausrichtkörper ein Ring (15) verwendet wird.

21. Verfahren nach Anspruch 19 oder 20, **dadurch gekennzeichnet, dass** als Positionierungsmittel eine aufblasbare Hülle (3) verwendet wird, die eine Rohrauskleidung (4) aus einem mit aushärtbarem Harz versehenen flexiblen Trägermaterial gegen einen zu sanierenden Rohrabschnitt drückt, wobei ein Zylinderabschnitt (10) der Rohrauskleidung (4) von einem Stutzenschlauch (8) der aufblasbaren Hülle (3) in die Mündung des Hausanschlussrohrs (12) gedrückt wird.

22. Verfahren nach Anspruch 21, **dadurch gekennzeichnet, dass** der Stutzenschlauch (8) der Hülle (3) zusammen mit dem Zylinderabschnitt (10) der Rohrauskleidung (4) vor dem Einschieben des ringförmigen Ausrichtkörpers (15) durch diesen hindurch in das Innere der Hülle (3) gezogen wird.

23. Verfahren nach Anspruch 21 oder 22, **dadurch gekennzeichnet, dass** in der Hülle (3) während des Transports zu der genannten Rohrabzweigung ein Unterdruck erzeugt wird.

24. Verfahren nach einem der Ansprüche 21 bis 23, **dadurch gekennzeichnet, dass** der Zylinderabschnitt (10) im Bereich seiner Verbindung mit dem gegen das Hauptrohr (11) anliegenden Hauptabschnitt (9) der Rohrauskleidung (4) gegen die Mündung des Hausanschlussrohrs (12) gedrückt wird.

25. Verfahren nach einem der Ansprüche 19 bis 24, **dadurch gekennzeichnet, dass** der Ausrichtkörper (15) nach dem Aushärten der Rohrauskleidung (4) von der genannten Mündung wegbewegt und die Luft aus der aufblasbaren Hülle (3) abgelassen wird.

26. Verfahren nach einem der Ansprüche 19 bis 25, **dadurch gekennzeichnet, dass** ein Positioniermittel (3,8) für die Rohrauskleidung (4) über verbundene Gestänge (2) beim Positionieren in dem Hauptrohr (11) verschoben und gedreht wird.

27. Verfahren nach Anspruch 26, **dadurch gekennzeichnet, dass** ein Positioniermittel (3,8) beim Verschieben und Drehen über ein Fahrwerk (20) mit teleskopartigen Radsystemen geführt wird.

28. Verfahren nach Anspruch 22, **dadurch gekennzeichnet, dass** am Ende des Stutzenschlauchs (8) ein im Inneren des Stutzenschlauchs (8) verlaufendes Seil (13) befestigt ist, welches zum Zurückziehen des Stutzenschlauchs (8) zusammen mit dem Zylinderabschnitt (10) der Rohrauskleidung (4) zurückgezogen wird.

29. Verfahren nach Anspruch 28, **dadurch gekennzeichnet, dass** beim Zurückziehen in den Stutzenschlauch (8) ein Überdruck geleitet wird und das Ende des Zylinderabschnitts (10) in den Umstülpungsbereich des Stutzenschlauchs (8) gestopft und beim weiteren Zurückziehen hierdurch mitgenommen wird.

## Claims

1. Device for renovating pipe connections, with
• a positioning means (3,8) for positioning a curable pipe lining (4) on the branch of a service pipe off a mains pipe (11),
• a transport means for transporting the positioning means (3, 8) and the pipe lining (4) to the said branch,
• an alignment body (15), which is movably arranged on the transport means and is movable into the opening of the service pipe (12),
• a drive (16) for moving the alignment body (15) into the opening of the service pipe (12),
**characterised in that** it has spring means (23), which press the alignment body (15) elastically resiliently in the direction of the opening of the service pipe (12) and enable the alignment body (15) to be displaced until it locks in the opening of the service pipe (12).

2. Device according to claim 1, **characterised in that** the alignment body is formed by a ring (15).

3. Device according to claim 1 or 2, **characterised in that** the pipe lining (4) has a flexible support material provided with curable resin.

4. Device according to claim 3, **characterised in that** the pipe lining (4) has a cylinder section (10), which can be inserted into the opening of the service pipe (12).

5. Device according to claims 2 to 4, **characterised in that** the cylinder section (10) surrounds the ring (15) during insertion into the opening of the service pipe (12).

6. Device according to claim 4, **characterised in that** the positioning means is an inflatable envelope (3), which has a connection tube (8), which presses the cylinder section (10) against the wall of the service pipe (12) when in the inflated state.

7. Device according to claim 6, **characterised in that** the alignment body is formed by the connection tube (8) of the envelope.

8. Device according to one of the preceding claims, **characterised in that** me transport means has at least one travel gear (20), which has the said spring means (23), by means of which wheels (21) are resiliently connected to the transport means.

9. Device according to claim 6, **characterised in that** the inflatable envelope is a reversible and stretchable packer tube (3), which has approximately the size and shape of the pipe section to be renovated, including the incorporated connection tube (8), wherein the attachment of the packer tube (3) to the connection tube (8) can be pushed into the opening of the service pipe (12), and wherein the pipe lining (4) made of a support material provided with curable resin (LCR liner) is positioned by pushing into place and is pressed against the pipe section to be renovated by inflating the packer tube (3).

10. Device according to claim 9, **characterised in that** the packer tube (3) has at least one of the following features:
• it is made of a textile fabric coated with silicone,
• it has a smaller dimension than the pipe section to be renovated,
• the connection tube (8) of the packer tube (3) is moulded onto the section (9) of the packer tube (3) filling the mains pipe (11) in accordance with the service connection angle, preferably at an angle of 45° to 90°.

11. Device according to claim 9 or 10, **characterised in that** the connection tube (8) is a section moulded onto the packer tube (3) or a part fixedly connected thereto.

12. Device according to one of the preceding claims, **characterised in that** the drive motor (25) is a pneumatic motor.

13. Device according to claim 12, **characterised in that** the positioning means (3, 8) is an inflatable envelope, and that it has a pressure pipe (7) for supplying compressed air for inflating the inflatable envelope (3, 8), wherein the pressure pipe supplies the pneumatic motor (25) with compressed air as operating medium.

14. Device according to one of the preceding claims, **characterised in that** it has a heating device (29) for heating the curable pipe lining (4).

15. Device according to claim 14, **characterised in that** the heating device (29) has an electrical heating spiral.

16. Device according to one of the preceding claims, **characterised in that** the positioning means (8) is connected to a detection means (14, 30) for detection of the complete extent of the positioning means (8).

17. Device according to claim 16, **characterised in that** the positioning means is a connection tube (8) and the detection means is a winding box (14), which has a switch (30) and is connected to the connection tube (8) by a rope (13).

18. Device according to claim 17, **characterised in that** the switch (30) is operatively connected to a signal means (31).

19. Method for renovating pipe connections, which comprises the following steps:
• transporting a curable pipe lining (4) to the branch of a service pipe (12) off a mains pipe (11),
• positioning the curable pipe lining (4) on the said branch,
• curing the pipe lining (4),
• inserting an alignment body (15) into the opening of the service pipe (12) before positioning the pipe lining (4),
**characterised in that** the alignment body (15) is elastically pressed in the direction of the opening of the service pipe (12) and if necessary is displaced until the alignment body (15) locks in the opening of the service pipe (12).

20. Method according to claim 19, **characterised in that** a ring (15) is used as alignment body.

21. Method according to claim 19 or 20, **characterised in that** an inflatable envelope (3) is used as positioning means, which presses a pipe lining (4) made of a flexible support material provided with curable resin against a pipe section to be renovated, wherein a cylinder section (10) of the pipe lining (4) is pressed by a connection tube (8) of the inflatable envelope (3) into the opening of the service pipe (12).

22. Method according to claim 21, **characterised in that** the connection tube (8) of the envelope (3) is pulled together with the cylinder section (10) of the pipe lining (4) through the ring-shaped alignment body (15) into the interior of the envelope (3) before said alignment body is inserted.

23. Method according to claim 21 or 22, **characterised in that** an underpressure is generated in the envelope (3) during transport of said pipe branch.

24. Method according to one of claims 21 to 23, **characterised in that** the cylinder section (10) is pressed against the opening of the service pipe (12) in the region of its connection to the main section (9) of the pipe lining (4) abutting against the mains pipe (11).

25. Method according to one of claims 19 to 24, **characterised in that** the alignment body (15) is moved away from said opening after curing of the pipe lining (4) and the air is let out of the inflatable envelope (3).

26. Method according to one of claims 19 to 25, **characterised in that** a positioning means (3, 8) for the pipe lining (4) is displaced and rotated by means of connected linkages (2) during positioning in the mains pipe (11).

27. Method according to claim 26, **characterised in that** a positioning means (3, 8) is guided during the displacement and rotation by means of a travel gear (20) with telescopic wheel systems.

28. Method according to claim 22, **characterised in that** a rope (13) running in the interior of the connection tube (8) is fastened at the end of the connection tube (8) and is pulled back to withdraw the connection tube (8) together with the cylinder section (10) of the pipe, lining (4).

29. Method according to claim 28, **characterised in that** during withdrawal an excess pressure is directed into the connection tube (8) and the end of the cylinder section (10) is pushed into the reversal region of the connection tube (8) and entrained through this upon further withdrawal.

## Revendications

1. Dispositif de rénovation de canalisations, avec
• un moyen de positionnement (3, 8) pour positionner un revêtement de tuyau durcissable (4) au niveau de l'embranchement d'un tuyau de raccordement d'immeuble d'une conduite principale (11),
• un moyen de transport pour amener le moyen de positionnement (3, 8) et le revêtement de tuyau (4) audit embranchement,
• un élément d'alignement (15) qui est disposé de manière mobile sur le moyen de transport et qui peut être déplacé dans l'ouverture du tuyau de raccordement d'immeuble (12),
• un entraînement (16) pour déplacer l'élément d'alignement (15) dans l'ouverture du tuyau de raccordement d'immeuble (12),
**caractérisé en ce qu'**il présente des moyens de ressort (23) qui contraignent l'élément d'alignement (15) élastiquement en direction de l'ouverture du tuyau de raccordement d'immeuble (12) et qui permettent de déplacer l'élément d'alignement (15) jusqu'à ce qu'il s'encliquète dans l'ouverture du tuyau de raccordement d'immeuble (12).

2. Dispositif selon la revendication 1, **caractérisé en ce que** l'élément d'alignement est formé par un anneau (15).

3. Dispositif selon la revendication 1 ou la revendication 2, **caractérisé en ce que** le revêtement de tuyau (4) présente un matériau support flexible revêtu de résine durcissable.

4. Dispositif selon la revendication 3, **caractérisé en ce que** le revêtement de tuyau (4) présente un tronçon cylindrique (10) qui peut être introduit dans l'ouverture du tuyau de raccordement d'immeuble (12).

5. Dispositif selon les revendications 2 à 4, **caractérisé en ce que** le tronçon cylindrique (10) entoure l'anneau (15) lors de son introduction dans l'ouverture du tuyau de raccordement d'immeuble (12).

6. Dispositif selon la revendication 4, **caractérisé en ce que** le moyen de positionnement est une gaine gonflable (3) qui présente un manchon flexible (8) qui dans l'état gonflé comprime le tronçon cylindrique (10) contre la paroi du tuyau de raccordement d'immeuble (12).

7. Dispositif selon la revendication 6, **caractérisé en ce que** l'élément d'alignement est formé par le manchon flexible (8) de la gaine.

8. Dispositif selon l'une des revendications précédentes, **caractérisé en ce que** le moyen de transport présente au moins un dispositif de translation (20) qui présente lesdits moyens de ressort (23) par le biais desquels les roues (21) sont reliées élastiquement au moyen de transport.

9. Dispositif selon la revendication 6, **caractérisé en ce que** la gaine gonflable est une gaine d'étanchéité réversible et extensible (3) ayant sensiblement la taille et la forme du tronçon de canalisation à rénover, y compris le manchon flexible (8) lié, un mécanisme de levage (16) et le moyen d'alignement (15) permettant de pousser la liaison de la gaine d'étanchéité (3) avec le manchon flexible (8) dans l'ouverture du tuyau de raccordement d'immeuble (12), le revêtement de tuyau (4) constitué d'un matériau support revêtu de résine durcissable (*LCR liner*, garniture de remplacement à vie) étant positionné par cette poussée et comprimé par le gonflage de la gaine d'étanchéité (3) contre le tronçon de canalisation à rénover.

10. Dispositif selon la revendication 9, **caractérisé en ce que** la gaine d'étanchéité (3) présente l'une au moins des caractéristiques suivantes :
• elle se compose d'une toile textile revêtue de silicone,
• elle a une dimension inférieure à celle du tronçon de canalisation à rénover,
• le manchon flexible (8) de la gaine d'étanchéité (3) est formé d'un seul tenant avec le tronçon (9) de la gaine d'étanchéité (3) qui remplit la conduite principale (11) de façon qu'il corresponde au coude de raccordement d'immeuble, de préférence avec un angle de 45° à 90°.

11. Dispositif selon la revendication 9 ou la revendication 10, **caractérisé en ce que** le manchon flexible (8) est un segment formé d'un seul tenant avec la gaine d'étanchéité (3) ou un élément relié fixement à cette dernière.

12. Dispositif selon l'une des revendications précédentes, **caractérisé en ce que** le moteur entraînement (25) est un moteur pneumatique.

13. Dispositif selon la revendication 12, **caractérisé en ce que** le moyen de positionnement (3, 8) est une gaine gonflable et **en ce qu'**il présente une conduite sous pression (7) alimentant l'air comprimé qui sert à gonfler la gaine gonflable (3, 8), ladite conduite sous pression amenant de l'air comprimé au moteur pneumatique (25) en tant que fluide de travail.

14. Dispositif selon l'une des revendications précédentes, **caractérisé en ce qu'**il présente un dispositif de chauffage (29) servant à chauffer le revêtement de tuyau durcissable (4).

15. Dispositif selon la revendication 14, **caractérisé en ce que** le dispositif de chauffage (29) présente une résistance chauffante électrique spiralée.

16. Dispositif selon l'une des revendications précédentes, **caractérisé en ce que** le moyen de positionnement (8) est relié à un moyen de détection (14, 30) servant à détecter l'expansion complète du moyen de positionnement (8).

17. Dispositif selon la revendication 16, **caractérisé en ce que** le moyen de positionnement est un manchon flexible (8) et le moyen de détection est une boîte enveloppante (14) qui présente un interrupteur (30) et qui est reliée au manchon flexible (8) par un câble (13).

18. Dispositif selon la revendication 17, **caractérisé en ce que** l'interrupteur (30) est relié de manière active à un moyen de signalisation (31).

19. Procédé de rénovation de canalisations, comprenant les étapes consistant à :
• Amener un revêtement de tuyau durcissable (4) à l'embranchement d'un tuyau de raccordement d'immeuble (12) d'une conduite principale (11),
• Positionner le revêtement de tuyau durcissable (4) au niveau dudit embranchement,
• Durcir le revêtement de tuyau (4),
• Introduire un élément d'alignement (15) dans l'ouverture du tuyau de raccordement d'immeuble (12) avant de positionner le revêtement de tuyau (4),
**caractérisé en ce que** l'élément d'alignement (15) est contraint élastiquement en direction de l'ouverture du tuyau de raccordement d'immeuble (12) et si nécessaire déplacé jusqu'à ce que l'élément d'alignement (15) s'encliquète dans l'ouverture du tuyau de raccordement d'immeuble (12).

20. Procédé selon la revendication 19, **caractérisé en ce qu'**un anneau (15) est utilisé comme élément d'alignement.

21. Procédé selon la revendication 19 ou la revendication 20, **caractérisé en ce que** le moyen de positionnement utilisé est une gaine gonflable (3) qui plaque un revêtement de tuyau (4) constitué d'un matériau support flexible revêtu de résine durcissable contre un tronçon de canalisation à rénover, un tronçon cylindrique (10) du revêtement de tuyau (4) étant comprimé par un manchon flexible (8) de la gaine gonflable (3) dans l'ouverture du tuyau de raccordement d'immeuble (12).

22. Procédé selon la revendication 21, **caractérisé en ce que** le manchon flexible (8) de la gaine (3) est tiré à l'intérieur de la gaine (3) avec le tronçon cylindrique (10) du revêtement de tuyau (4) en traversant l'élément d'alignement annulaire (15) avant que ce dernier soit introduit.

23. Procédé selon la revendication 21 ou la revendication 22, **caractérisé en ce qu'**une dépression est générée dans la gaine (3) pendant le transport vers ledit embranchement de canalisation.

24. Procédé selon l'une des revendications 21 à 23, **caractérisé en ce que**, dans la zone de sa jonction avec le tronçon principal (9) du revêtement de tuyau (4) plaqué contre la conduite principale (11), le tronçon cylindrique (10) est comprimé contre l'ouverture du tuyau de raccordement d'immeuble (12).

25. Procédé selon l'une des revendications 19 à 24, **caractérisé en ce que** l'élément d'alignement (15) est retiré de ladite ouverture après le durcissement du revêtement de tuyau (4) et l'air est évacué de la gaine gonflable (3).

26. Procédé selon l'une des revendications 19 à 25, **caractérisé en ce que**, lors du positionnement dans la conduite principale (11), un moyen de positionnement (3, 8) du revêtement de tuyau (4) est déplacé et tourné par une tringlerie (2) qui y est rattachée.

27. Procédé selon 1a revendication 26, **caractérisé en ce que**, lors du déplacement et de la rotation, un moyen de positionnement (3, 8) est guidé par le biais d'un dispositif de translation (20) équipé de systèmes de roues télescopiques.

28. Procédé selon la revendication 22, **caractérisé en ce qu'**un câble (13) passant à l'intérieur du manchon flexible (8) est fixé à l'extrémité du manchon flexible (8), lequel câble est tiré en arrière pour retirer le manchon flexible (8) avec le tronçon cylindrique (10) du revêtement de tuyau (4).

29. Procédé selon la revendication 28, **caractérisé en ce que**, lors du retrait, une surpression est introduite dans le manchon flexible (8) et l'extrémité du tronçon cylindrique (10) est bourrée dans la zone de retournement du manchon flexible (8) et entraînée à travers celui-ci par la poursuite du mouvement de retrait.
